# EUROPEAN PATENT SPECIFICATION

(11) **EP 2 647 570 B1**
(45) Date of publication and mention of the grant of the patent: **12.03.2014**
(21) Application number: 12163449.7
(22) Date of filing: 05.04.2012
(51) Int. Cl.: B64D 11/00, B64D 13/06

(54) **Environment control system**
Umgebungssteuersystem
Système de contrôle d'environnement

(43) Date of publication of application: 09.10.2013
(73) Proprietor: Airbus SAS, 31700 Blagnac (FR)
(72) Inventor: Ly, Vinh, 31300 Touloue (FR)
(74) Representative: Gicquel, Olivier Yves Gérard

(56) References cited:
- DE-A1-102006 005 523
- US-A1- 2005 200 937
- US-A1- 2008 234 893

## Description

The present invention relates to an environmental control system for controlling environmental devices integrated onto a vehicle, for example, an air conditioning system, a window shading system, or a mood lighting system and the like or any combination of such systems. The environmental control system is particularly suitable for use in commercial aircraft.

In the specification of the patent application US2005/0200937 A1, which is considered to be the closest prior art, there is described a specific apparatus for multi-color electrochromic devices that can be used as a window shading system in a commercial aircraft.

According to the invention, there is provided, a method of operating an environment control system adapted to be integrated into a vehicle, said environment control system comprising at least one environmental device and a plurality of user interface devices linked to a control unit, the control unit operating the at least one environmental device depending on majority of inputs received from the plurality of user interface devices in such a way that, in-use, the collaborative wishes of users controls the environmental device, said method comprising the steps of:
a. monitoring change requests sent by a plurality of user interface devices
b. triggering a poll survey amongst a plurality of user interface devices and monitoring responses to the poll for a predetermined time period
c. receiving responses to the poll sent by inputs on the user interface devices
d. synthesizing the responses to the poll into a single entity
e. depending on the single entity, sending a signal to operate the environmental device.

According to a further not claimed aspect of the invention there is provided an aircraft comprising a fuselage having a cabin divided into at least a passenger section, a plurality of user interface devices arranged in the passenger section connected to an environment control system according to the first aspect of the invention.

The invention will now be described by way of example with reference to the accompanying drawings, of which:-
Figure 1 shows a schematic view of a longitudinal section of a forward portion of a cabin of an aircraft fuselage including an Environment Control System (ECS) according to the present invention;
Figure 2 is a similar view as figure 1 showing the forward portion of the cabin divided into a plurality of zones by the ECS;
Figure 3 shows zone I from figure 2 comprising one environment device and an arrangement of user interface devices;
Figure 4 shows a matrix structure arranged to represent the arrangement of user interface devices as shown in Figure 3;
Figures 5a to 5c show a flow chart detailing a method of operating the ECS according to the present invention;
Figure 6 is a similar view as figure 1 showing the ECS according to a variant of the present invention linked to a plurality of electrochromic windows;
Figure 7 is a similar view as figure 1 showing the ECS according to another variant of the present invention linked to a plurality of air supply devices; and
Figures 8a to 8c show flow charts detailing a method of operating the ECS as shown in figure 7.

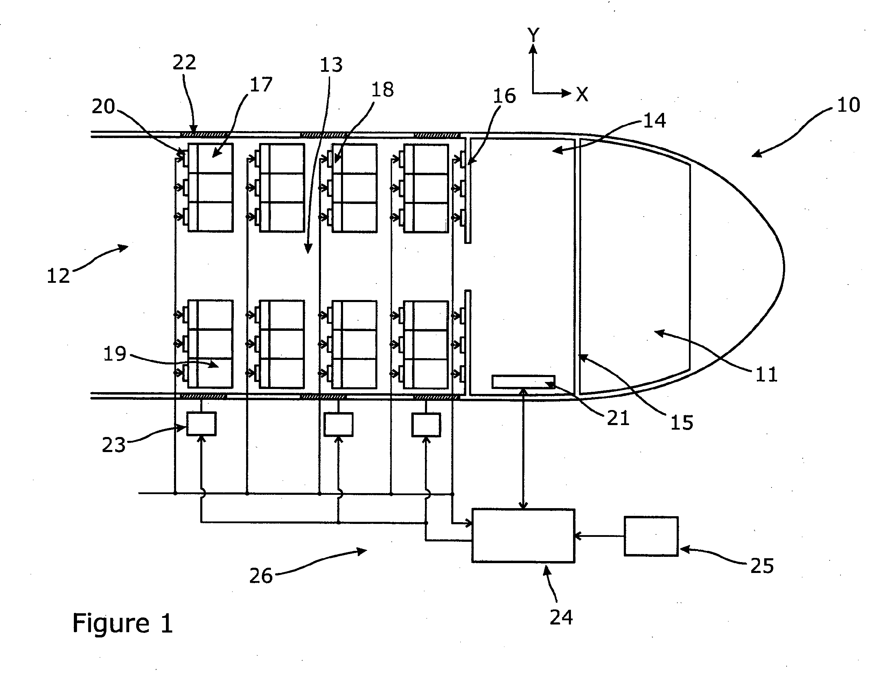

With reference to figure 1, there is shown an aircraft fuselage (10), comprising a longitudinal (X) and a transversal (Y) axis, having a cockpit (11) and a cabin (12), which is divided into a passenger section (13) and a cabin-crew section (14). The cockpit (11) is separated from the cabin by a partition (15). The cabin comprises a divider (16) for separating the cabin-crew section (14) from the passenger section (13). Seats (17), having a seat back (18) and a seat base (19), are arranged in rows in the passenger section (13). Each row comprises six seats (17) in line transversally (Y) with each other. In the passenger section (13), there is a plurality of user interface devices (20) called In-Flight Entertainment (IFE) panels. The user interface device (20) is preferably a touch screen panel comprising the input unit, processor unit, and electronic display unit hence forming a single device. There is another user interface device (21) in the cabin crew section called Flight Attendant Panel (FAP). The user interface device (21) comprises an input unit for sending electronic signals to a processor unit. The processor unit is connected to an electronic display unit. The IFE panels (21) are located in front of each seat (17) integrated into the seat back (18) of the seat in front or embedded into the divider (16) in front of the seat. In a conventional manner, a plurality of windows are installed in the fuselage (10). An environmental device (22) having the form of a motorised blind is arranged onto each window. Each blind is connected to an actuator (23) for operating the blind between a retracted, or "open", position and a position covering the window, or "closed" position.

A control unit (24) is linked to the IFE panels (20) and the FAP (21) respectively, an input device (25), and the actuators (23) altogether forming an environment control system (ECS) (26) The control unit (24) allows electronic signals to be sent to and received from, the IFE panels (20) and the FAP (21). The control unit (24) is capable of sending electronic signals to each motor for controlling the power output settings. The input device (25) is preferably a CD ROM drive but may also be a USB port, an electronic tape reader or the like.

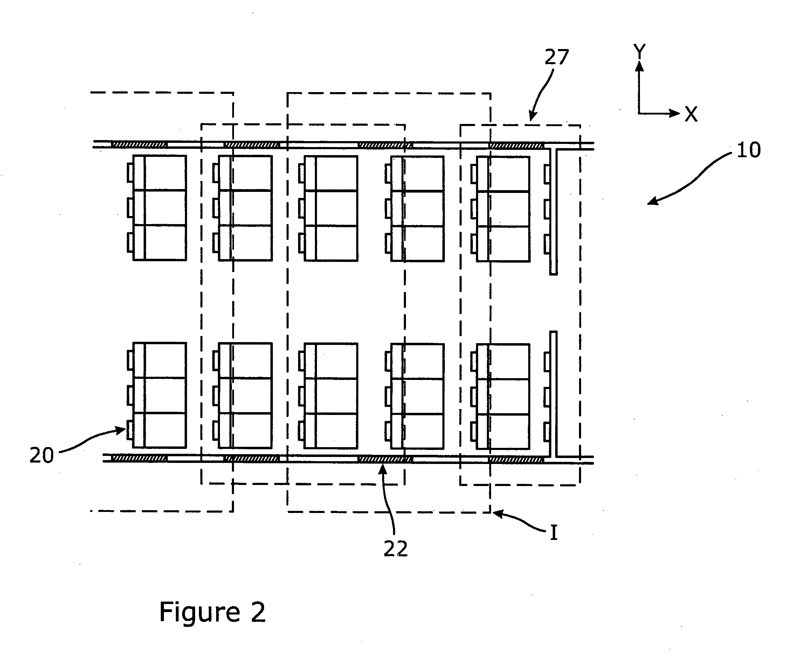

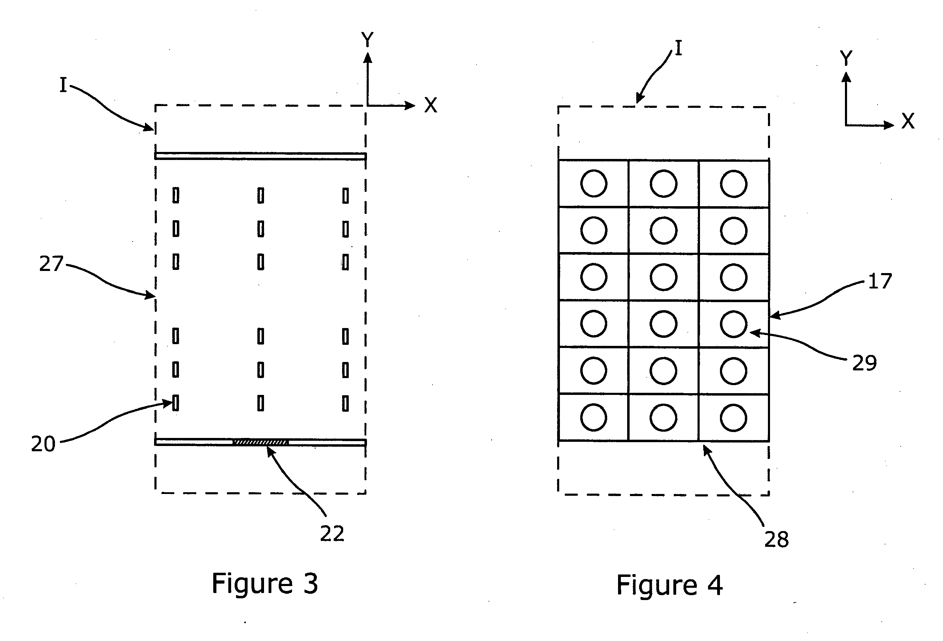

The control unit (24) comprises a processor, a memory unit, and a clock capable of running a plurality of timers in parallel. A zone (27) is created for each blind, as shown in figure 2, and saved to a zoning database created in the memory unit of the control unit (24). A matrix structure database is created within the memory of the control unit (24). With reference to figure 4, for each zone, a matrix structure (28) is created within the matrix structure database. Each matrix structure comprises a plurality of elements (29). In this example the matrix is made of an arrangement of 6x3 elements corresponding to the IFE panels (21) of the corresponding zone (27)

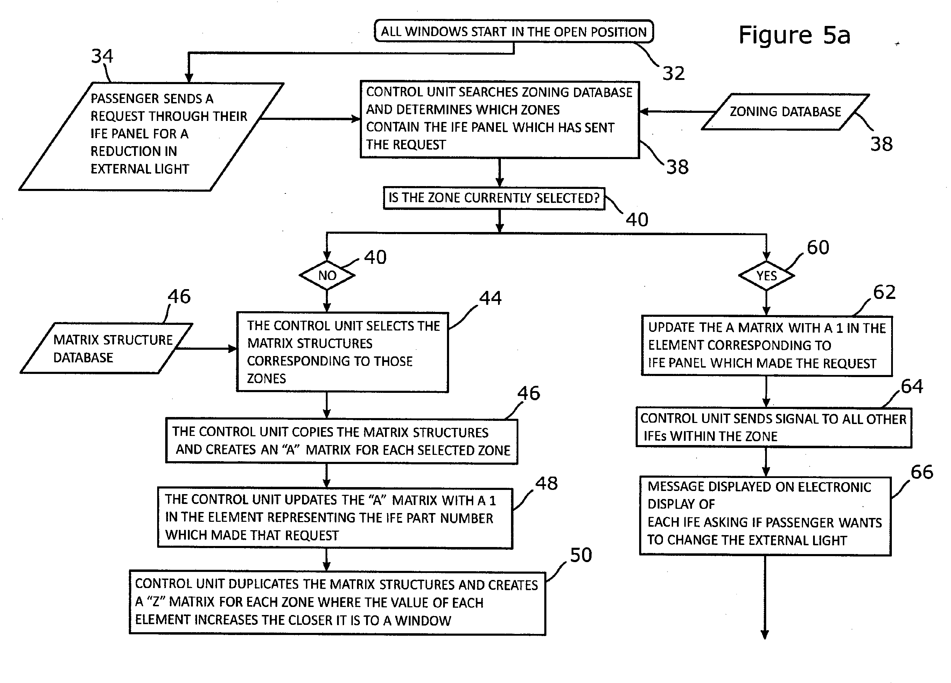

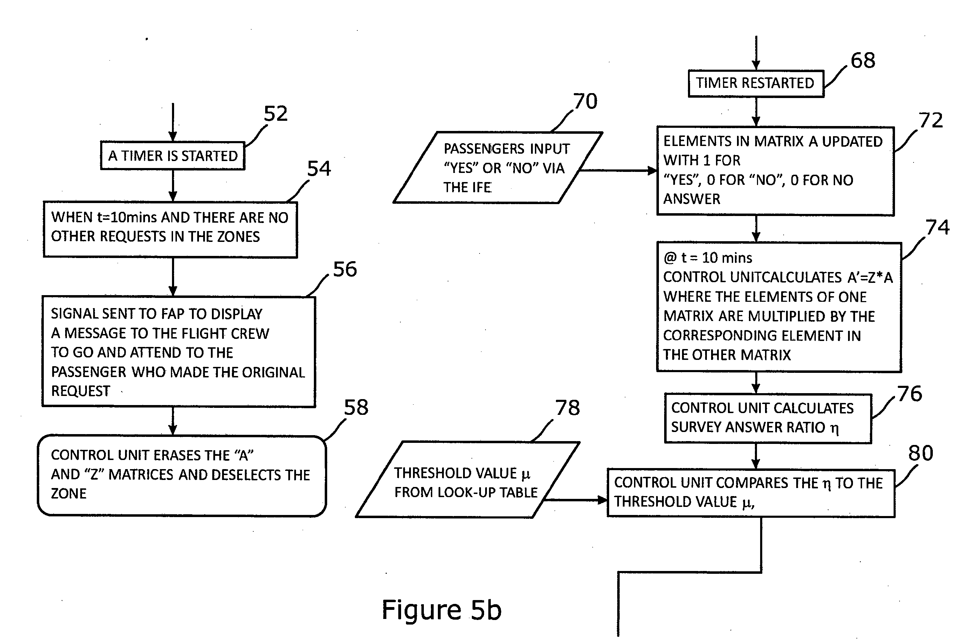

A description of the operation of the ECS (26) according to the present invention will be done in relation to show the flow chart (30) in figures 5a to 5c. All blinds (22) are in their "open" position 32. A passenger from the aircraft requests a decrease in external light 34 via the IFE panel (21) in front of their seat (17). The IFE panel (21) sends a signal to the control unit (24) to indicate the request and the IFE panel (21) which made the request. The control unit (24) searches the zoning database at step 36 and determines which zones (27) contain the IFE panel which sent the request at step 38. The control unit (24) considers whether each zone (27) containing the IFE panel which sent the original request is already selected from the zoning database at step 40. If any of the zones (27) have not already been selected at step 42, the control unit (24) selects the corresponding matrix structures at step 44, from the matrix structure database at step 46. The control unit (24) duplicates the matrix structures (28) and creates an A matrix at step 46. The control unit updates the element (29) in the matrix structures (29), where the initial starting value for each element is zero, corresponding to the location of the IFE panel making the request, to a one at step 48. The control unit (24) the duplicates the matrix structures (28) again and creates a Z matrix at step 50. The Z matrix is a weighting matrix. The control unit (24) updates the values of the elements within the Z matrix, where elements corresponding to IFE panels located close to the blind are assigned higher values, for instance six, than elements corresponding to IFE panels (21) located further away from the blind, for instance zero. The control unit (24) then starts a timer on the clock at step 52 so that the control unit (24) can monitor the A and Z matrices for, a predetermined period of time, in this example ten minutes, at step 54.

If after the first request was received by the control unit (24), no other requests were received from an IFE panel (21) within the same zone within the predetermined period of time (ten minutes), the control unit (24) sends a signal to the FAP (20) with details of the IFE panel (21) sending the original request so that the flight crew can address the needs of that passenger at step 56. The A and Z matrices are then erased 58 at step.

If another request is made by a passenger via their IFE panel (21) for a reduction in external light 34, the control unit (24) searches the zoning database at step 36 to determine which zones (27) contain the IFE panel (21) sending the request 38 at step. If the zone (27) is currently selected at step 60, then the control unit (24) finds the corresponding A matrix and updates the element within the A matrix, corresponding to location of the IFE panel (21), with a one at step 62. The control unit (24) then instructs the control unit (24) to send a signal to all IFE panels (21) within the zone at step 64 to display a message on the display unit asking whether the passenger would like to decrease the external light at step 66. The control unit (24) triggers a timer for a predetermined period of time for instance ten minutes at step 68. Passengers input "YES" or "NO" via the input device on their IFE panels (21) at step 70. The processor converts this input to a signal to be sent to the control unit (24). The processor processes any signals received in response to the poll. The elements (29) in the A matrix, corresponding to the location of IFE panels sending the signals, are updated with a value = 1 for "YES" and value = 0 for "NO" at step 72. When the timer reaches the predetermined period, i.e. ten minutes, the control unit (24) calculates an A' matrix where A' = A*Z 74. Note that the A' matrix will have the same size, e.g. 6 x 3 matrix, as the A and Z matrices. Then the control unit (24) calculates the survey answer ratio, η, at step 76 by dividing A' matrix by the number of elements (29) within A' Matrix. Matrix A' is then divided by the number of elements within the A' matrix to give the answer ratio, η, at step 76. The control unit (24) then searches a look up table, within the memory unit, to find the threshold value µ, for example 0.3, for the selected zone at step 78. η is then compared to µ at step 80.

If η is less than µ 82, the control unit (24) sends a signal to the IFE panels (21) in the zone (27) to display a message on the display unit advising that the status of the blind will not be closed due to a majority decision 84 at step. The A and Z matrices are then erased and a timer is started 86 at step for a predetermined period of time, in this example twenty minutes, then the zone and the matrix structure are deselected 88.

If η is greater than µ 90, the control unit sends a signal to operate the actuator (23) of the corresponding blind to move it from an "open" position to a "closed" position at step 92. The A and Z matrices are then erased and a timer is started 86 at step for a predetermined period of time, in this example twenty minutes, then the zone and the matrix structure are deselected 88.

One of the advantages associated with this ECS 27, according to the invention, is that the control unit (24) allows a zone of passengers to collaboratively control a blind. The weighting "Z" matrix also provides priority for the passengers whose seats (17) are closest to the blind within a zone (27).

It will be appreciated that the numerical values within the Z matrices can cover a large range. The function of the Z matrix is to assign a weighting to each IFE panel according to their localities to the environmental device (22).

In a variant of the invention not shown, the control unit (24) which can be modified to allow passengers to "open" the blind rather than just "close" the blind.

In a further variant not shown, an override function is added to the ECS (26). The override function is in the form of a switch located in the proximity of each window. When the switch is pressed, a signal is sent to the control unit (24) which searches the zoning database for the zone (27) containing the blind closest to where the switch is located. The zone (27) in the memory unit is then locked by the control unit (24). A timer is started and for (20) minutes, for instance, the control unit cannot select the zone (27) from the zoning database. This variant provides for priority passengers closest to the blind, cabin, or flight crew, to have full control over the position of the blind regardless of the wishes of the other passengers within the zone (27). This can help during landing for example when all blinds (22) should be in the "open" position.

In a further variant, the ECS (24) can determine the position of a blind by sending an interrogation signal to the actuator (23) which sends a response signal back to the control unit (24) detailing its current position. When the control unit (24) receives the response signal from the actuator (23), the control unit (24) assesses if the request for a change of position in the blind, requested by the IFE panel, is possible. If it is possible to change the position of the blind, the control unit (24) continues with the aforementioned method of operation. If a change of position of the blind is not possible, the control unit (24) sends a signal to the IFE panel to display a message to the passenger on the electronic display unit that the change of external light request is not possible.

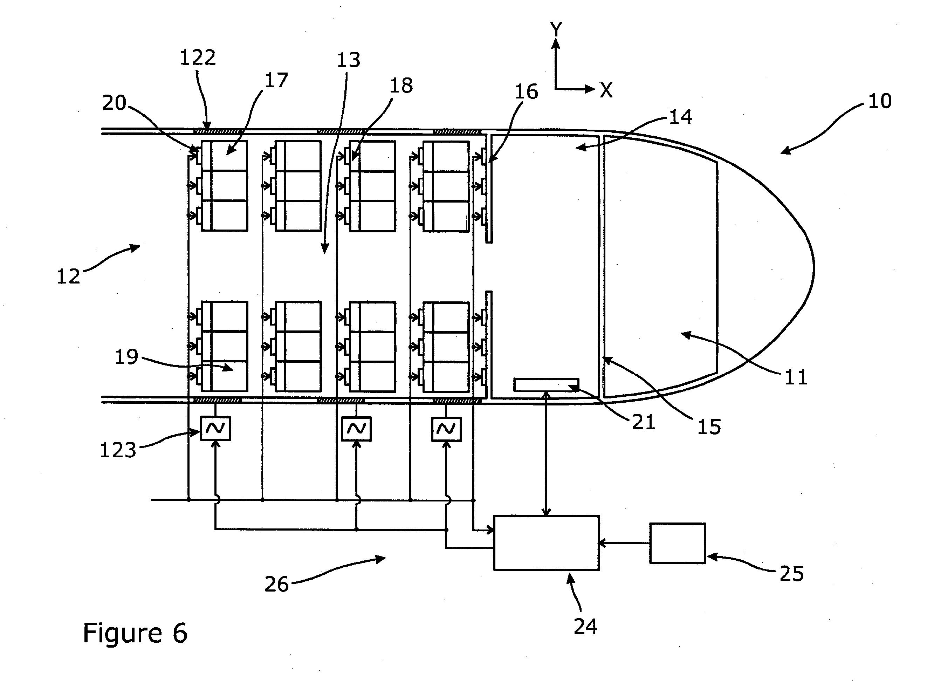

In another variant, as shown in figure 6, the windows are replaced by conventional electrochromic windows which form environmental devices (122). In this embodiment, the electrochromic windows are each linked to a power supply (123). The power supplies (123) linked to the control unit (24).

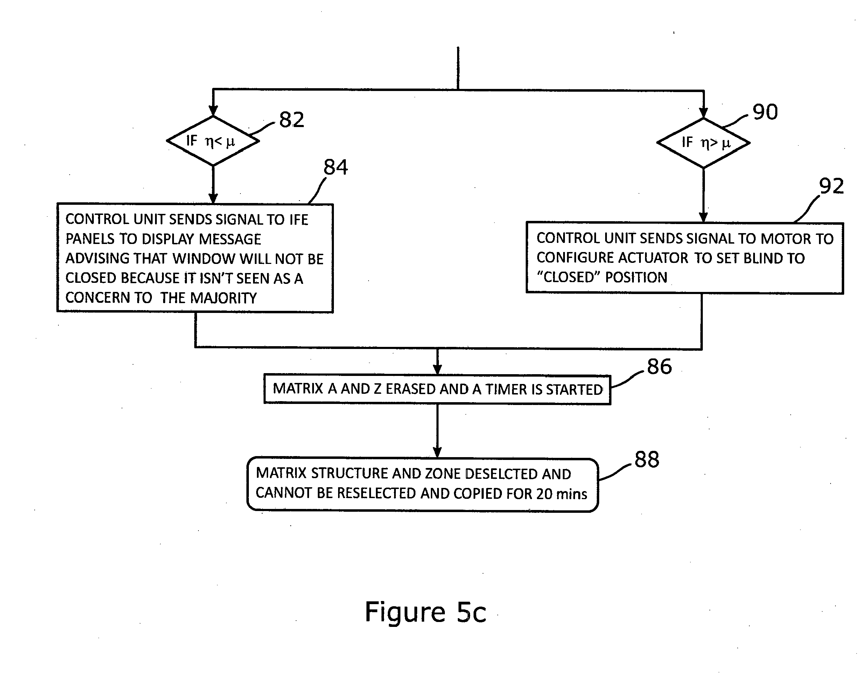

The method of operating the ECS 27, as shown in figure 5c, is similar to the one described above with the difference that the control unit (24) sends a signal to the power supply (123). After receiving the signal from the control unit (24), the power supply (123) applies a voltage across the electrochromic window to change its opacity from transparent "open" to opaque "closed". When the opacity has changed, the power supply (123) removes the voltage applied to the electrochromic window and the opacity of the electrochromic window remains opaque "closed" as it is well known. It is possible then to modify the method of operating the ECS (26) so that the electrochromic window changes from opaque "closed" to transparent "open". In order to achieve this change, the voltage applied to the power supply (123) is reversed.

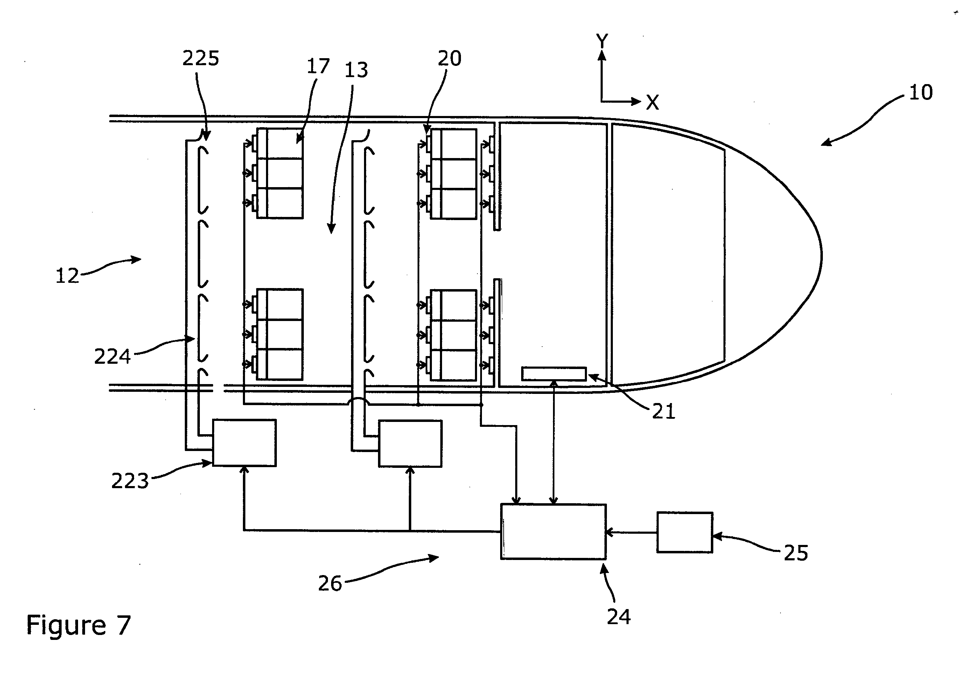

With reference to figure 7, in a further embodiment, the environmental system (222) is an air conditioning system. The air conditioning system comprises an air supplying device (223), air supply ducts (224) and inlets (225). The air supplying device, which is not shown in detail in the figures, is linked to the control unit (24). The air supplying device comprises a compressor, which is fed with high temperature bleed air from an aircraft engine, and a mixer. The mixer is also fed by a duct supplying ram air at the temperature and pressure outside the fuselage of the aircraft (10), and re-circulated air from within the passenger section (13) of the cabin. Valves and temperature sensors (also not shown in the figures) are located at the mixer's interface with the compressor, re-circulated air, ram air, and air supply ducts (224) located downstream of the mixer to regulate the temperature and pressure at the outlet of the mixer. The air supply duct (224) enters the passenger section (13) and expels air at the requested temperature via inlets (225).

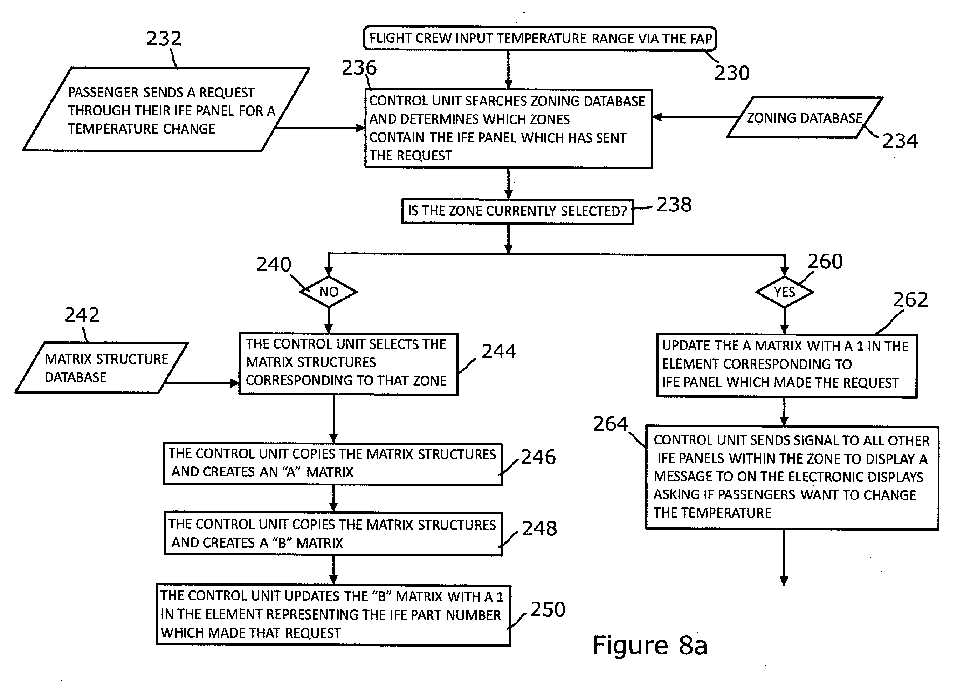

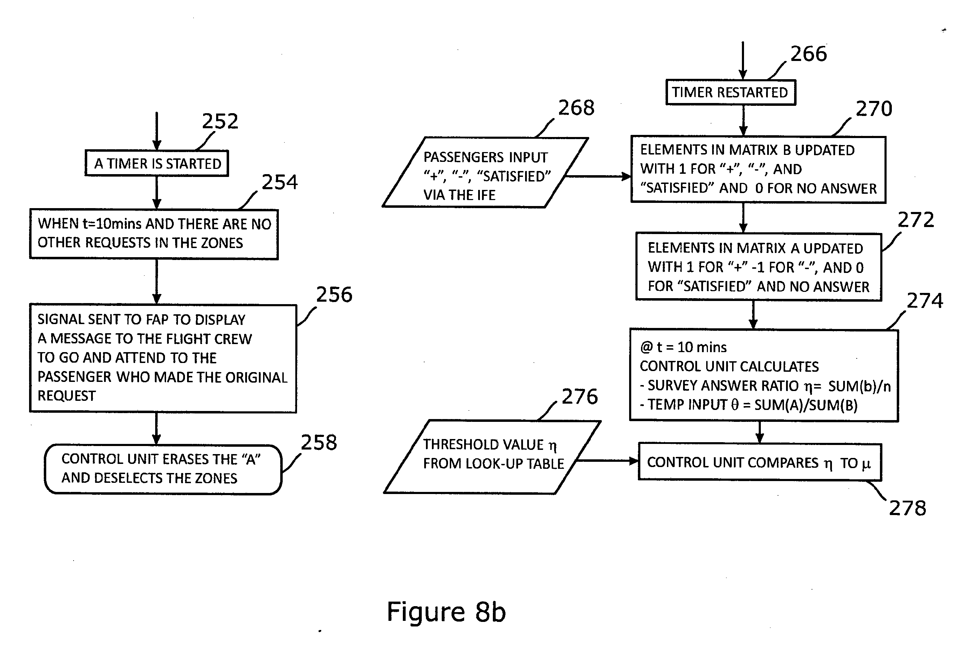

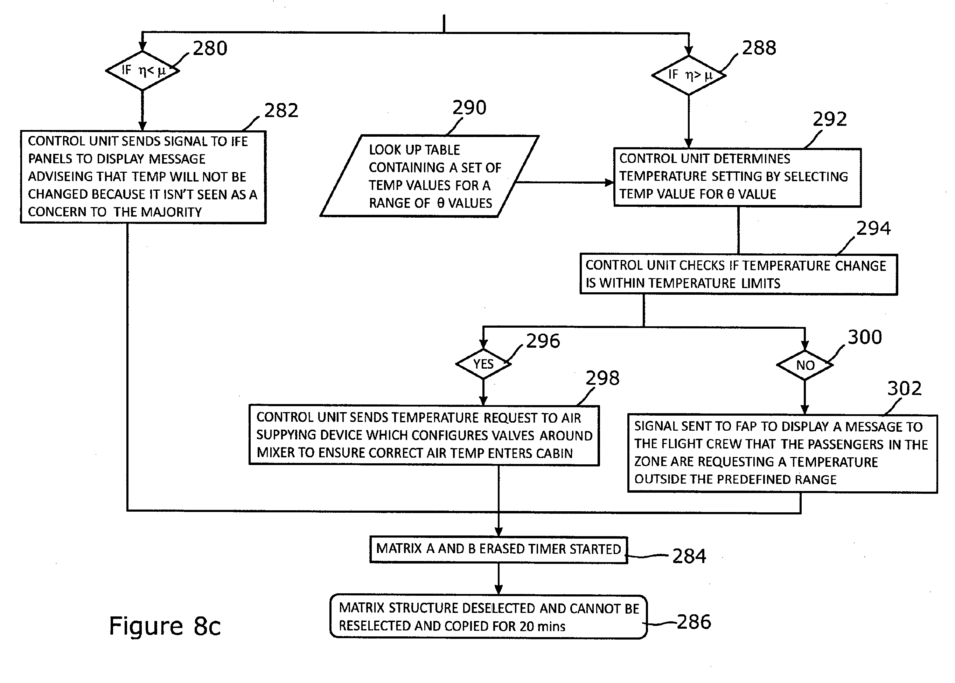

The method of operating the ECS (26) for this variant is described now with reference to figures 8a to 8c. The cabin crew input a temperature range to the control unit (24) via the FAP at step 230. A passenger inputs a change of temperature request via their IFE panel at step 232. The control unit (24) searches the zoning database at step 234 and selects the zones which contain the IFE panel which made the request 236. The control unit (24) determines if a zone is already selected at step 238. If a zone (27) isn't already selected 240, the control unit (24) searches the matrix structure database at step 242 and selects the matrix structure (28) corresponding to that zone at step 244. The control unit then duplicates the matrix structure and creates an A 246 and a B matrix at step 248. The control unit updates the element corresponding to the IFE panel making the request, with a one at step 240. A timer is started at step 242. If no temperature change requests received by the ECS (26) within ten minutes at step 244 the control unit (24) sends a message to the FAP so that the flight crew can attend to the needs of the passenger who made the temperature change request at step 246. The A matrix is then delete and the zone deselected at step 248.

If another request is made for a change in temperature at step 232 the control unit (24) searches the zoning database at step 234 and selects the zones containing the IFE panel making the request at step 236. The control unit compares the zone to those already selected at step 238. If a zone is already selected at step 260 updates the element in the A matrix corresponding to the location of the IFE panel making the request with a one at step 262. The control unit (24) then sends a signal to the IFE panels within the zone to display a poll on the electronic display asking if the passengers want to change the temperature within the zone at step 264. The control unit starts a timer at step 266. Passengers input if they would like an increase in temperature, a decrease in temperature, or whether they are satisfied via their IFE panel at step 268. The control unit updates the elements of the B matrix with a one for an increase in temperature, a decrease in temperature, and already satisfied responses at step 270. The control unit (24) updates the elements of the B matrix with a one for an increase in temperature request and a minus one for a decrease in temperature request, whereas the already satisfied responses remain as zero at step 272. At a time of ten minutes, the control unit calculates a survey answer ratio η=sum(B)/n where n is the number of elements within the B matrix and the sum operation adds up the numerical values of the elements within the B matrix. The control unit also calculates a temperature input θ=sum(A)/sum(B). The control unit searches a look up table within the memory unit at step 276 and compares a threshold value µ from the look up table to the survey answer ratio, η, at step 278.

If η is less than µ 280 the control unit sends a signal to the IFE panels within the zone to display a message on the electronic display explaining to the passengers that temperature is not seen as a problem at step 282. The control unit then erases matrices A and B for that zone Ind starts a timer at step 284. The control unit (24) then deselects the zone (27)and cannot reselect it for twenty minutes.

If η is greater than µ 288, the control unit (24) searches a look up table within the memory unit which contains a set of temperature values for a range of θ values at step 290. The control unit selects a temperature value corresponding to the θ that has been calculated at step 292. The control unit then compares the temperature value against the temperature limits at step 294. If the temperature change is allowed at step 296, the control unit sends a signal with a temperature setting to the air supplying device at step 298. The air supplying device configures the valves interfacing between the mixer and the compressor, the ram air duct, the re-circulating air duct and the air supply duct (223) to deliver the correct air temperature to the passenger section (13) via the inlets (224) in the affected zone (27). The control unit then erases matrices A and B for that zone and starts a timer at step 284. The control unit (24) then deselects the zone (27) and cannot reselect it for twenty minutes at step 286.

If the temperature value falls outside of the temperature limits at step 300, the control unit sends a signal to the FAP to display a message on the electronic display advising the cabin-crew that a zone of passengers is requesting a temperature outside of the temperature limits at step 302 so the cabin crew can deal with the situation by either resetting the temperature range or treating the passengers in the zone. The control unit then erases matrices A and B for that zone and starts a timer at step 284. The control unit (24) then deselects the zone (27) and cannot reselect it for twenty minutes at step 286.

In a further variant, the environmental device is a mood lighting system. Preferably the mood lighting system is used in conjunction with the air supplying devices. There is one mood lighting system in each zone defined by the ECS (26) for the air conditioning system (222). The mood lighting system comprises at least three LEDs; one yellow, one blue, and one red, and a diffuser. During operation, if the temperature value is above the temperature limits set by the cabin crew at step 302, the control unit sends a signal to configure the diffuser to allow a higher percentage of red light through. If the temperature value is lower than the temperature limits set by the cabin crew at step 302, the control unit (24) sends a signal to configure the diffuser to allow a higher percentage of blue light through. The increase in blue or red light passing through the diffuser is known as a change in colour temperature. A change in colour temperature is gives the passengers in the zone the artificial feeling that the physical temperature has changed.

The ECS (26) is by no means limited to the aforementioned variants. It will be well appreciated by one skilled in the art that a similar method of operating the ECS (26) can be applied for other environmental devices such as volume control for a speaker system. It will be appreciated that the user interface panels (20) can be personal devices such as laptops, tablet computers, smart phones, or the like. Also, the ECS can be transferred to vehicles other than an aircraft, such as a coach.

## Claims

1. A method of operating an environment control system (26) adapted to be integrated into a vehicle, said environment control system comprising at least one environmental device (22); (122); (222) and a plurality of user interface devices (20),(21) linked to a control unit (24), the control unit (24) operating the at least one environmental device (22); (122); (222) depending on majority of inputs received from the plurality of user interface devices (20),(21), in such a way that, in-use, the collaborative wishes of users controls the environmental device (22); (122); (222), said method comprising the steps of:
a. monitoring change requests sent by the plurality of user interface devices (20, 21)
b. triggering a poll survey amongst the plurality of user interface devices (20) and monitoring responses to the poll for a predetermined time period
c. receiving responses to the poll sent by inputs on the user interface devices (20)
d. synthesizing the responses to the poll into a single entity
e. depending on the single entity, sending a signal to operate the environmental device (22); (122); (222).

2. The method as claimed in claim 1, further comprising after step d) the step d') of, selecting a threshold value from a look-up table and comparing the single entity against the threshold value.

3. The method as claimed in claim 2 wherein step e) further comprises if the single entity is greater than the threshold value sending a signal to operate the environmental device (22); (122); (222) and if the single entity is less than the threshold value, sending a message to the plurality of user interface devices (20) informing that the environmental device (22; 122; 222) will not be operated.

## Patentansprüche

1. Verfahren zum Betreiben eines Umgebungssteuersystems (26), das zum Einbauen in ein Fahrzeug ausgebildet ist, wobei das Umgebungssteuer system mindestens eine Umgebungsvorrichtung (22); (122); (222) und mehrere Benutzerschnittstellenvorrichtungen (20), (21) aufweist, die mit einer Steuereinheit (24) verbunden sind, wobei die Steuereinheit (24) die mindestens eine Umgebungsvorrichtung (22); (122); (222) abhängig von einer Mehrheit von Eingaben betreibt, die von den mehreren Benutzerschnittstellenvorrichtungen (20), (21) empfangen werden, derart dass bei Gebrauch die gemeinschaftlichen Wünsche von Benutzern die Umgebungsvorrichtung (22); (122); (222) steuern, wobei das Verfahren folgende Schritte aufweist:
a. Überwachungsänderungsanfragen, die von den mehreren Benutzerschnittstellenvorrichtungen (20, 21) gesendet werden
b. Einleiten einer Umfrage unter den mehreren Benutzerschnittstellenvorrichtungen (20) und Überwachen der Antworten auf die Umfrage für eine vorbestimmte Zeitperiode
c. Empfangen von Antworten auf die Umfrage, die durch Eingaben an den Benutzerschnittstellenvorrichtungen (20) gesendet werden
d. Synthetisieren der Antworten auf die Umfrage zu einer Einheit
e. abhängig von der Einheit, Senden eines Signals zum Betreiben der Umgebungsvorrichtung (22); (122); (222).

2. Verfahren nach Anspruch 1, des Weiteren aufweisend nach Schritt d) den Schritt d') zum Auswählen eines Schwellenwertes aus einer Verweistabelle und Vergleichen der Einheit mit dem Schwellenwert.

3. Verfahren nach Anspruch 2, wobei Schritt e), wenn die Einheit größer als der Schwellenwert ist, des Weiteren das Senden eines Signals aufweist, um die Umgebungsvorrichtung (22); (122); (222) zu betreiben, und wenn die Einheit kleiner als der Schwellenwert ist, das Senden einer Nachricht zu den mehreren Benutzerschnittstellenvorrichtungen (20), die in formiert, dass die Umgebungsvorrichtung (22; 122; 222) nicht betrieben wird.

## Revendications

1. Procédé d'actionnement d'un système de contrôle d'environnement (26) adapté de façon à être intégré dans un véhicule, ledit système de contrôle d'environnement comprenant au moins un dispositif environnemental (22) ; (122) ; (222) et une pluralité de dispositifs d'interface utilisateur (20), (21) reliés à une unité de commande (24), cette unité de commande (24) actionnant l'au moins un dispositif environnemental (22) ; (122) ; (222) selon la majorité d'entrées reçues de la pluralité de dispositifs d'interface utilisateur (20), (21), de manière à ce que, en cours d'utilisation, les souhaits collaboratifs des utilisateurs commandent le dispositif environnemental (22) ; (122) ; (222), ledit procédé comprenant les étapes consistant à :
a. surveiller les demandes de changement envoyées par la pluralité de dispositifs d'interface utilisateur (20, 21),
b. déclencher un sondage parmi la pluralité de dispositifs d'interface utilisateur (20) et surveiller les réponses à ce sondage pendant une période de temps prédéterminée,
c. recevoir les réponses au sondage envoyées par les entrées sur les dispositifs d'interface utilisateur (20),
d. synthétiser les réponses au sondage en une seule entité,
e. suivant cette seule entité, envoyer un signal pou r actionner le dispositif environnemental (22) ; (122) ; (222).

2. Procédé selon la revendication 1, comprenant en outre, après l'étape d), l'étape d') consistant à sélectionner une valeur seuil à partir d'une table à consulter et à comparer la seule entité avec cette valeur seuil.

3. Procédé selon la revendication 2, dans lequel l'étape e) comprend en outre, si la seule entité est plus grande que la valeur seuil, l'envoi d'un signal pour actionner le dispositif environnemental (22) ; (122) ; (222) et si la seule entité est plus petite que la valeur seuil, l'envoi d'un message à la pluralité de dispositifs d'interface utilisateur (20) informant que le dispositif environnemental (22 ; 122 ; 222) ne sera pas actionné.
